Europäisches Patentamt

(19) European Patent Office

Office européen des brevets

(11) Veröffentlichungsnummer: **0 228 993**
**B1**

(12) **EUROPÄISCHE PATENTSCHRIFT**

(45) Veröffentlichungstag der Patentschrift:
**17.05.89**

(51) Int. Cl.⁴: **F16B 19/14**

(21) Anmeldenummer: **86810572.7**

(22) Anmeldetag: **08.12.86**

(54) **Vorrichtung zum Befestigen von Gegenständen an einem Untergrund.**

(30) Priorität: **16.12.85 DE 3544423**

(43) Veröffentlichungstag der Anmeldung:
**15.07.87 Patentblatt 87/29**

(45) Bekanntmachung des Hinweises auf die Patenterteilung:
**17.05.89 Patentblatt 89/20**

(84) Benannte Vertragsstaaten:
**CH DE FR GB LI SE**

(56) Entgegenhaltungen:
**DE-A- 1 728 058**
**DE-B- 1 475 052**
**FR-A- 1 566 657**
**US-A- 2 914 983**

(73) Patentinhaber: **HILTI Aktiengesellschaft,**
**FL-9494 Schaan(LI)**

(72) Erfinder: **Oehry, Norbert, In der Fina 23,**
**F-9494 Schaan(LI)**
Erfinder: **Hartmann, Manfred, Gurtis 90,**
**A-6820 Frastanz(AT)**
Erfinder: **Kindle, Edwin, An der Halde 368,**
**FL-9495 Triesen(LI)**

(74) Vertreter: **Wildi, Roland, Hilti Aktiengesellschaft**
**Patentabteilung, FL-9494 Schaan(LI)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zum Befestigen von Gegenständen, die mit einer Durchtrittsöffnung versehen sind, an einem Untergrund, mit einen Verankerungsschaft und einen an diesen anschliessenden Abschnitt mit Gewinde aufweisendem Verankerungsbolzen und Gewindemutter, wobei der Verankerungsbolzen mit dem Verankerungsschaft im Untergrund verankert und die Gewindemutter gegen die Gegenstände gespannt wird.

Zum Befestigen von Gegenständen an einem Untergrund ist es aus der DE-A-1 728 058 bekannt, Verankerungsbolzen im Untergrund zu verankern und mittels einer auf den aus dem Untergrund ragenden Abschnitt des Verankerungsbolzens aufschraubbaren Gewindemutter den Gegenstand gegen den Untergrund zu spannen.

Dieser Spannvorgang führt zu einer erheblichen Zug- und Torsionsbeanspruchung der beispielsweise durch Eintreiben mittels Pulverkraft erzielten Verankerung des Verankerungsbolzens im Untergrund. Diese durch den Spannvorgang hervorgerufenen Beanspruchungen wirken zusätzlich zum Lastangriff an den befestigten Gegenständen und deren Eigengewicht auf die Verankerung. Dadurch steht für die der Vorrichtung effektiv zukommende Funktion, nämlich der Aufnahme der durch den Lastangriff an den zu befestigenden Gegenständen und deren Gewicht hervorgerufenen Kräfte nur noch ein Teil der Haltekraft der Verankerung zur Verfügung. Uebersteigen die beim Spannvorgang auftretenden Beanspruchungen die Haltekraft der Verankerung, löst sich die Vorrichtung im Untergrund und fällt somit für den Befestigungszweck aus.

Der Erfindung liegt die Aufgabe zugrunde, eine Vorrichtung zum Befestigen von Gegenständen an einem Untergrund zu schaffen, die das Befestigen der Gegenstände weitgehend ohne Beanspruchung der Verankerung als Folge des Spannvorganges erlaubt.

Erfindungsgemäss wird die Aufgabe dadurch gelöst, dass zwischen dem Gewinde des Verankerungsbolzens und der Gewindemutter ein Verbindungselement mit einem mit dem Gewinde des Verankerungsbolzens verschraubbaren Anschlussgewinde und Aussengewinde für die Gewindemutter angeordnet ist, wobei im montierten Zustand das Verbindungselement die Durchtrittsöffnung der Gegenstände durchragt und eine die Axialprojektion der Durchtrittsöffnung wenigstens teilweise überragende Anschlagschulter aufweist, die von dem mit dem Aussengewinde für die Gewindemutter versehenen Endbereich abgewandt ist.

Durch die Verwendung eines Verbindungselementes mit Anschlagschulter können die zu befestigenden Gegenstände mittels der auf das Aussengewinde des Verbindungselementes aufschraubbaren Gewindemutter gegen die Anschlagschulter des Verbindungselementes gespannt werden. Dadurch lässt sich eine Beanspruchung der Verankerung des Verankerungsbolzens beim Spannvorgang der Gegenstände verhindern. Die gesamte Haltekraft der Verankerung steht demnach zur Aufnahme von Lasten, die sich durch äusseren Lastangriff an den Gegenständen oder durch das Gewicht derselben ergeben, zur Verfügung.

Zum Befestigen der Gegenstände wird nach dem Verankern des Verankerungsbolzens im Untergrund das Verbindungselement mit dem Anschlussgewinde mit dem ein Gewinde tragenden Abschnitt des Verankerungsbolzens verschraubt. Anschliessend werden die zu befestigenden Gegenstände, die zum Durchgriff des Verbindungselementes eine Durchtrittsöffnung aufweisen, auf das Verbindungselement aufgebracht, wobei es zu einer Abstützung der Gegenstände an der die Durchtrittsöffnung radial überragenden Anschlagschulter kommt. Anschliessend wird die Gewindemutter auf das Aussengewinde des Verbindungselementes aufgeschraubt, was zu einer Verkonterung zwischen Verbindungselement und Gewindemutter unter Zwischenlage der Gegenstände führt.

Vorzugsweise ist das Verbindungselement als Gewindebuchse ausgebildet, die ein als Innengewinde für den mit Gewinde versehenen Abschnitt des Verankerungsbolzens ausgebildetes Anschlussgewinde aufweist. Eine Gewindebuchse mit Innengewinde findet zum Anschluss an Verankerungsbolzen Verwendung, deren Gewinde ein Aussengewinde ist, wobei der Abschnitt mit dem Aussengewinde nach dem Verankern des Verankerungsbolzens den Untergrund überragt. Die Gewindebuchse wird bis zur Anlage am Untergrund auf den Verankerungsbolzen aufgeschraubt.

Nach einem weiteren Vorschlag ist das Verbindungselement als Bolzen mit als Aussengewinde gestaltetem Anschlussgewinde in dem Aussengewinde für die Gewindemutter gegenüberliegenden Bereich ausgebildet. Vorteilhaft ist bei dieser Ausführungsform, dass der Bolzen mit dem als Aussengewinde gestalteten Anschlussgewinde mit einem Innengewinde des Verankerungsbolzens verschraubt werden kann, wobei der das Innengewinde tragende Abschnitt im Untergrund versenkt wird.

Die Anschlagschulter ist zweckmässig zwischen den Aussengewinden angeordnet. Durch Verschrauben des Bolzens gelangt die Anschlagschulter in Anlage zur Stirnseite des Abschnittes mit Innengewinde, so dass es möglich ist, auch die Anschlagschulter weitgehend zu versenken. Die Gegenstände lassen sich also mit sehr kleinem Abstand zum Untergrund festlegen.

Um sicherzustellen, dass auch bei einer Materialpaarung mit niedrigem Reibwert zwischen Verbindungselement und Gegenständen beim Anziehen der Gewindemutter das Verbindungselement nicht mitdreht, weist die den Gegenständen zugewandte Stirnfläche der Anschlagschulter mit Vorteil eine Profilierung auf. Die Profilierung schafft einen ein Mitdrehen des Verbindungselementes unterbindenden Angriff an den Gegenständen. Bei der Profilierung kann es sich beispielsweise um eine Riffelung handeln.

Nach einem weiteren Vorschlag der Erfindung wird ein Mitdrehen des Verbindungselementes unterbunden, indem dieses Angriffsmittel für ein Drehmomente aufnehmendes Rückhaltemittel aufweist. Als Angriffsmittel eignet sich beispielsweise ein Schraubenzieherschlitz oder eine das Verbindungselement durchquerende Bohrung, wobei das Rückhalteelement im ersten Falle ein Schraubenzieher und im zweiten Falle ein einsteckbarer Mitnahmestift sein kann. Bevorzugt sind die Angriffsmittel als Schlüsselflächen ausgebildet. Schlüsselflächen haben unter anderem den Vorteil, dass diese ein Betätigen mittels handelsüblicher gängiger Rückhalteelemente, wie beispielsweise Gabelschlüssel, erlauben.

Bei einem als Gewindebuchse ausgebildeten Verbindungselement sind die Schlüsselflächen mit Vorteil an der Innenkontur der Gewindebuchse in dem mit dem Aussengewinde für die Gewindemutter versehenen Endbereich angeordnet. Dieserart ist von der Spannseite der Vorrichtung her, durch Angriff eines Inbusschlüssels an den Schlüsselflächen, ein Mitdrehen der Gewindebuchse unterbindbar. Ebenso ist es auf diese Weise auch möglich, für eine allenfalls erforderliche Einstellung unterschiedlicher Abstände der Gegenstände zum Untergrund die Gewindebuchse in die erforderliche Axialposition gegenüber dem Verankerungsbolzen zu verdrehen und dann die Gegenstände festzuspannen.

Nach einem weiteren Vorschlag der Erfindung sind die Schlüsselflächen an der Aussenkontur des Verbindungselementes zwischen Anschlagschulter und Aussengewinde angeordnet und überragen die Axialprojektion des Aussengewindes. Ueber die an einem Längsabschnitt angeordneten Schlüsselflächen kann das Verbindungselement beispielsweise mit Hilfe eines Gabelschlüssels auf den Verankerungsbolzen aufgeschraubt werden. Die auf das Verbindungselement aufzubringenden Gegenstände weisen zweckmässig eine Durchtrittsöffnung in Form eines Längsschlitzes auf, dessen Breite der durch die Schlüsselflächen gebildeten Schlüsselweite entspricht. Dieserart kommt es zu einem Eingriff des Längsabschnittes in den Längsschlitz und damit durch Zusammenwirken mit den Schlüsselflächen zu einer Dreharretierung des Verbindungselementes. Die Gegenstände selbst bilden so das Rückhalteelement. Selbstverständlich ist es möglich, am Längsabschnitt über den Umfang verteilt mehrere Paare zueinander parallel angeordneter Schlüsselflächen vorzusehen. Dies bringt den Vorteil bedarfsgerechter, axialer Positionierung des Verbindungselementes, indem pro Umdrehung mehrere Eingriffspositionen zur Dreharretierung vorhanden sind.

Ein Abfangen von Torsionskräften beim Spannvorgang kann nach einem weiteren Vorschlag auch dadurch erreicht werden, dass der Verankerungsbolzen am Verankerungsschaft der Verdrehsicherung dienende Vorsprünge aufweist. Die Vorsprünge können beispielsweise durch in Eintreibrichtung des Verankerungsbolzens weisende Rippen gebildet sein, die sich im Untergrund verkrallen.

Die Erfindung wird nachstehend an Hand einer Zeichnung, die Ausführungsbeispiele wiedergibt, näher erläutert. Es zeigen:

Fig. 1 Eine Vorrichtung im Verwendungseinsatz, im Längsschnitt;

Fig. 2 einen Schnitt durch die Vorrichtung nach Fig. 1, gemäss Schnittverlauf II-II;
Fig. 3 eine weitere Ausführungsform einer Vorrichtung im Verwendungseinsatz, im Längsschnitt;
Fig. 4 eine Ansicht der Vorrichtung nach Fig. 3, von oben;
Fig. 5 eine weitere Ausführungsform einer Vorrichtung im Verwendungseinsatz, im Längsschnitt;
Fig. 6 einen Schnitt durch die Vorrichtung nach Fig. 5, gemäss Schnittverlauf VI-VI;
Fig. 7 eine weitere Ausführungsform einer Vorrichtung im Verwendungseinsatz, im Längsschnitt.

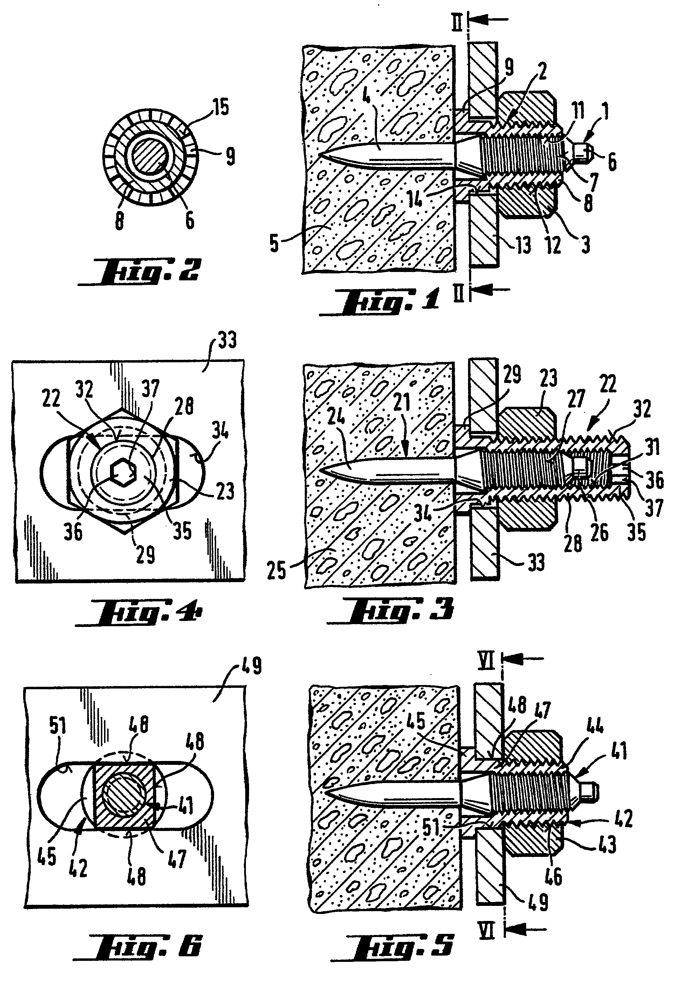

Die Vorrichtung nach Fig. 1 setzt sich aus einem insgesamt mit 1 bezeichneten Verankerungsbolzen, einer insgesamt mit 2 bezeichneten Gewindebuchse und einer Gewindemutter 3 zusammen. Der Verankerungsbolzen 1 besteht aus einem in eine Spitze auslaufenden Verankerungsschaft 4 zum Verankern in einem Untergrund 5 und aus einem an den Verankerungsschaft 4 anschliessenden Abschnitt 6 mit Gewinde 7. Die Gewindebuchse 2 besteht aus einem rohrförmigen Hals 8 und einer dessen Mantelkontur radial überragenden Anschlagschulter 9 am einen Ende des Halses 8. Der Hals 8 verfügt über ein Innengewinde 11 zur Schraubverbindung mit dem Verankerungsbolzen 1 und über ein Aussengewinde 12 zur Aufnahme der Gewindemutter 3.

Zum Befestigen eines Gegenstandes 13 am Untergrund 5 wird vorerst der Verankerungsbolzen 1 mit dem Verankerungsschaft 4 zur Verankerung in den Untergrund 5 eingetrieben. Daraufhin wird die Gewindebuchse 2, mit der Anschlagschulter 9 voran, auf den Verankerungsbolzen 1 aufgeschraubt, bis die Anschlagschulter 9 in Anlage an der Oberfläche des Untergrundes 5 gelangt. Der Gegenstand 13 wird sodann auf die Gewindebuchse 2 aufgesetzt, wozu im Gegenstand 13 eine Durchtrittsöffnung 14 vorgesehen ist, deren lichte Weite kleiner als das Aussenmass der Anschlagschulter 9 ist. Dadurch stützt sich der Gegenstand 13 an der Anschlagschulter 9 ab. Durch darauffolgendes Aufschrauben der Gewindemutter 3 auf den Hals 8 wird der Gegenstand 13 gegen die Anschlagschulter 9 gespannt. Um jegliches Mitdrehen der Gewindebuchse 2 beim Spannvorgang zu unterbinden, ist, wie der Fig. 2 entnommen werden kann, die dem Gegenstand 13 zugewandte Stirnfläche der Anschlagschulter 9 mit einer als Riffelung ausgebildeten Profilierung 15 versehen. Diese wird beim Spannvorgang gegen die Unterseite des Gegenstandes 13 gepresst und verkrallt sich in diesem.

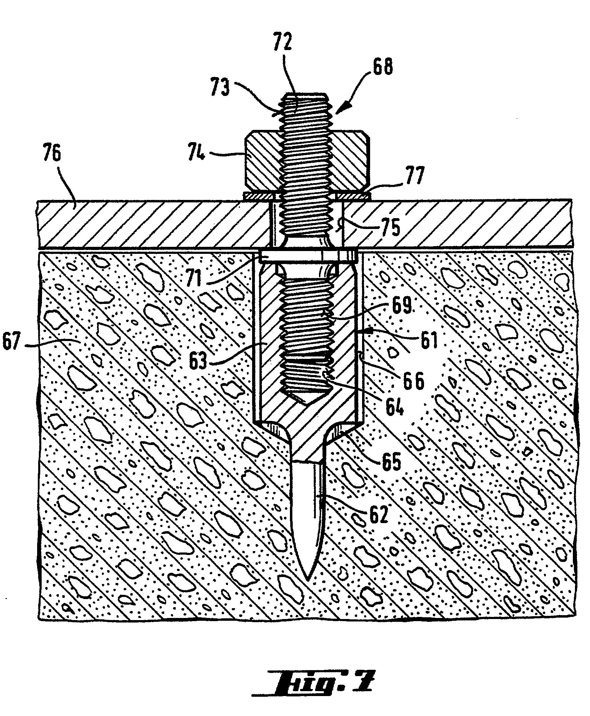

Die Vorrichtung nach Fig. 3 besteht wiederum aus einem insgesamt mit 21 bezeichneten Verankerungsbolzen, einer insgesamt mit 22 bezeichneten Gewindebuchse und einer Gewindemutter 23. Ein Verankerungsschaft 24 des Verankerungsbolzens 21 wird in einem Untergrund 25 verankert. An den Verankerungsschaft 24 schliesst sich nach hinten ein Abschnitt 26 mit Gewinde 27 an. Die Gewindebuchse 22 besteht aus einem Hals 28 und einer diesen endseitig radial überragenden Anschlagschulter 29. Ueber ein Innengewinde 31 ist die Gewindebuchse 22 auf den Verankerungsbolzen 21 aufschraubbar. Ein Aussengewinde 32 am Hals 28 dient der Aufnahme der Gewindemutter 23.

Ein Gegenstand 33 mit einer Durchtrittsöffnung 34 wird wiederum durch die Gewindemutter 23 gegen die Anschlagschulter 29 gespannt.

Im freien Endbereich weist der Hals 28 ein Bodenteil 35 auf, in dessen Zentrum eine polygonale Ausnehmung 36 zur Bildung von Schlüsselflächen 37 vorgesehen ist. Letztere dienen dem Eingriff eines Rückhalteelementes in Form eines Inbusschlüssels, um beim Spannvorgang ein Mitdrehen der Gewindebuchse 22 zuverlässig zu unterbinden.

Die Fig. 4 zeigt im besonderen die Form der Ausnehmung 36 und der beispielsweise als Langloch gestalteten Durchtrittsöffnung 34.

Auch die Ausführungsform nach Fig. 5 besteht im wesentlichen aus einem insgesamt mit 41 bezeichneten Verankerungsbolzen, einer insgesamt mit 42 bezeichneten Gewindebuchse und einer Gewindemutter 43. Die Gewindebuchse 42 weist wiederum einen Hals 44 und eine diesen radial überragende Anschlagschulter 45 auf. Der Hals 44 ist von dessen freien Ende her nur über einen Teil seiner Länge mit einem Aussengewinde 46 versehen. Im Längsabschnitt 47 zwischen der Anschlagschulter 45 und dem dieser zugeordneten Auslauf des Aussengewindes 46 trägt der Hals 44 Schlüsselflächen 48, welche das Aussengewinde radial überragen. Beim Festspannen eines Gegenstandes 49 ragt der Längsabschnitt 47 in eine als Langloch ausgebildete Durchtrittsöffnung 51 des Gegenstandes 49 und schafft über die Schlüsselflächen 48 eine Dreharretierung der Gewindebuchse 42. Diese Ausführungsform ist im besonderen zum Befestigen von Gegenständen geeignet, die für sich beim Spannvorgang keine Drehbewegung ausführen können. Der Gegenstand 49 dient so als Rückhalteelement, so dass auf den Einsatz von Werkzeugen als Rückhalteelement verzichtet werden kann.

Die Fig. 7 zeigt eine Vorrichtung mit einem insgesamt mit 61 bezeichneten Verankerungsbolzen. Dieser besteht aus einem Verankerungsschaft 62 und aus einem Abschnitt 63 mit gegenüber dem Verankerungsschaft 62 grösserem Durchmesser. Der Abschnitt 63 ist mit einem Innengewinde 64 versehen. Im Uebergangsbereich zu Abschnitt 63 weist der Verankerungsschaft 62 in Eintreibrichtung ragende rippenartige Vorsprünge 65 auf.

Der Verankerungsbolzen 61 sitzt in einer vorgefertigten Sacklochbohrung 66 des Untergrundes 67. Der Verankerungsschaft 62 ragt vom Grund der Sacklochbohrung 66 aus in den Untergrund 67, wodurch beim Eintreiben des Verankerungsbolzens 61 im Bereich der Oberfläche des Untergrundes 67 keine Spannungen auftreten, die ein Ausbrechen von Untergrund-Material bewirken könnten. Die Vorsprünge 65 haben sich am Ende des Setzvorganges im Grund der Sacklochbohrung 66 verkrallt. Dadurch können allenfalls auf den Verankerungsbolzen 61 einwirkende Torsionskräfte abgefangen werden.

In das Innengewinde 64 des Verankerungsbolzens 61 ist ein insgesamt mit 68 bezeichneter Bolzen mit einem als Aussengewinde gestalteten Anschlussgewinde 69 eingeschraubt. Eine Anschlagschulter 71 des Bolzens 68 liegt an der freien Stirnseite des Abschnittes 63 auf und überragt die Oberfläche des Untergrundes 67 geringfügig. Ein von der Anschlagschulter 71 abstehender Hals 72 des Bolzens 68 ist mit einem Aussengewinde 73 versehen, das dem Aufschrauben einer Gewindemutter 74 dient. Der Hals 72 durchragt eine Durchtrittsöffnung 75 in einem zu befestigenden Gegenstand 76, der sich an der Anschlagschulter 71 abstützt. Unter Zwischenlage einer Unterlegscheibe 77 wird der Gegenstand 76 von der Gewindemutter 74 gegen die Anschlagschulter 71 gespannt. Die Anschlagschulter 71 kann, zB wie in der Ausführungsform nach den Fig. 1, 2, an der dem Gegenstand 76 zugewandten Stirnfläche eine Profilierung aufweisen, die ein Mitdrehen des Bolzens 68 unterbindet.

## Patentansprüche

1. Vorrichtung zur Befestigung von Gegenständen, die mit einer Durchtrittsöffnung versehen sind, an einem Untergrund, mit einen Verankerungsschaft und einen an diesen anschliessenden Abschnitt mit Gewinde aufweisendem Verankerungsbolzen und Gewindemutter, wobei der Verankerungsbolzen mit dem Verankerungsschaft im Untergrund verankert und die Gewindemutter gegen die Gegenstände gespannt wird, dadurch gekennzeichnet, dass zwischen dem Gewinde (7, 27, 64) des Verankerungsbolzens (1, 21, 41, 61) und der Gewindemutter (3, 23 43, 74) ein Verbindungselement (2, 22, 42, 68) mit einem mit dem Gewinde (7, 27, 64) des Verankerungsbolzens (1, 21, 41, 61) verschraubbaren Anschlussgewinde und Aussengewinde (12, 32, 46, 73) für die Gewindemutter (3, 23, 43, 74) angeordnet ist, wobei im montierten Zustand das Verbindungselement (2, 22, 42, 68) die Durchtrittsöffnung (14, 34, 51, 75) der Gegenstände (13, 33, 49, 76) durchragt und eine die Axialprojektion der Durchtrittsöffnung (14, 34, 51, 75) wenigstens teilweise überragende Anschlagschulter (9, 29, 45, 71) aufweist, die von dem mit dem Aussengewinde (12, 32, 46, 73) für die Gewindemutter (3, 23, 43, 74) versehenen Endbereich abgewandt ist.

2. Vorrichtung nach Anspruch 1, dadurch gekennzeichnet, dass das Verbindungselement (2, 22, 42) als Gewindebuchse ausgebildet ist, die das als Innengewinde (11, 31) für den mit Gewinde (7, 27) versehenen Abschnitt (6, 26) des Verankerungsbolzens (1, 21, 41) ausgebildetes Anschlussgewinde aufweist.

3. Vorrichtung nach Anspruch 1, dadurch gekennzeichnet, dass das Verbindungselement als Bolzen (68) mit als Aussengewinde (69) gestaltetem Anschlussgewinde im dem Aussengewinde (73) für die Gewindemutter (74) gegenüberliegenden Bereich ausgebildet ist.

4. Vorrichtung nach Anspruch 3, dadurch gekennzeichnet, dass die Anschlagschulter (71) zwischen den Aussengewinden (69, 73) angeordnet ist.

5. Vorrichtung nach einem der Ansprüche 1 bis 4, dadurch gekennzeichnet, dass die den Gegenständen (13) zugewandte Stirnfläche der Anschlagschulter (9) eine Profilierung (15) aufweist.

6. Vorrichtung nach einem der Ansprüche 1 bis 5, dadurch gekennzeichnet, dass das Verbindungselement (22, 42) Angriffsmittel (37, 48) für ein Drehmomente aufnehmendes Rückhalteelement aufweist.

7. Vorrichtung nach Anspruch 6, dadurch gekennzeichnet, dass die Angriffsmittel als Schlüsselflächen (37, 48) ausgebildet sind.

8. Vorrichtung nach Anspruch 7, dadurch gekennzeichnet, dass die Schlüsselflächen (37) an der Innenkontur der Gewindebuchse (22) in dem mit Aussengewinde (32) für die Gewindemutter (23) versehenen Endbereich angeordnet sind.

9. Vorrichtung nach Anspruch 7, dadurch gekennzeichnet, dass die Schlüsselflächen (48) an der Aussenkontur des Verbindungselementes (42) zwischen Anschlagschulter (45) und Aussengewinde (46) angeordnet sind und die Axialprojektion des Aussengewindes (46) überragen.

10. Vorrichtung nach einem der Ansprüche 1 bis 9, dadurch gekennzeichnet, dass der Verankerungsbolzen (61) am Verankerungsschaft (62) der Verdrehsicherung dienende Vorsprünge (65) aufweist.

**Claims**

1. A device for fastening objects which are provided with a passage aperture to a substrate, having an anchorage bolt which has an anchorage shaft and a threaded portion connecting thereto, and a threaded nut, in which respect the anchorage bolt is anchored with the anchorage shaft in the substrate and the threaded nut is tightened against the objects, characterised in that arranged between the thread (7, 27, 64) of the anchorage bolt (1, 21, 41, 61) and the threaded nut (3, 23, 43, 74) is a connecting element (2, 22, 42, 68) having a connecting thread which is screwable with the thread (7, 27, 64) of the anchorage bolt (1, 21, 41, 61), and an external thread (12, 32, 46, 73) for the threaded nut (3, 23, 43, 74), in which respect in the mounted state the connecting element (2, 22, 42, 68) projects through the passage aperture (14, 34, 51, 75) of the objects (13, 33, 49, 76) and has a stop shoulder (9, 29, 45, 71) which projects at least partially beyond the axial projection of the passage aperture (14, 34, 51, 75) and which is averted from the end region which is provided with the external thread (12, 32, 46, 73) for the threaded nut (3, 23, 43, 74).

2. A device according to claim 1, characterised in that the connecting element (2, 22, 42) is designed as a threaded bush which has the connecting thread designed as an internal thread (11, 31) for that portion (6, 26) of the anchorage bolt (1, 21, 41) which is provided with the thread (7, 27).

3. A device according to claim 1, characterised in that the connecting element is designed as a bolt (68) having a connecting thread, shaped as an external thread (69), in the region lying opposite to the external thread (73) for the threaded nut (74).

4. A device according to claim 3, characterised in that the stop shoulder (71) is arranged between the external threads (69, 73).

5. A device according to one of claims 1 to 4, characterised in that that end surface of the stop shoulder (9) which faces the objects (13) has a profiling (15).

6. A device according to one of claims 1 to 5, characterised in that the connecting element (22, 42) has application means (37, 48) for a restraint element which absorbs torques.

7. A device according to claim 6, characterised in that the application means are designed as spanner surfaces (37, 48).

8. A device according to claim 7, characterised in that the spanner surfaces (37) are arranged on the inner contour of the threaded bush (22) in the end region which is provided with the external thread (32) for the threaded nut (23).

9. A device according to claim 7, characterised in that the spanner surfaces (48) are arranged on the outer contour of the connecting element (42) between the stop shoulder (45) and the external thread (46) and project beyond the axial projection of the external thread (46).

10. A device according to one of claims 1 to 9, characterised in that the anchorage bolt (61) has on the anchorage shaft (62) projections (65) which serve for the protection against torsion.

**Revendications**

1. Dispositif pour fixer sur un fond des objets munis d'une ouverture de passage, comprenant un boulon d'ancrage présentant une tige d'ancrage suivie d'une section filetée et d'un écrou, le boulon d'ancrage étant ancré avec la tige d'ancrage dans le fond et l'écrou étant bloqué contre les objets, caractérisé en ce que, entre le filetage (7, 27, 64) du boulon d'ancrage (1, 21, 41, 61) et l'écrou (3, 23, 43, 74) est disposé un élément de raccordement (2, 22, 42, 68) muni d'un filetage de raccordement associé au filetage (7, 27, 64) du boulon d'ancrage (1, 21, 41, 61) et avec un filet extérieur (12, 32, 46, 73) pour l'écrou (3, 23, 43, 74), l'élément de raccordement (2, 22, 42, 68) traversant, à l'état monté, l'ouverture de passage (14, 34, 51, 75) des objets (13, 33, 49, 76) et présentant un épaulement de butée (9, 29, 45, 71) dépassant du moins partiellement de la projection axiale de l'ouverture de passage (14, 34, 51, 75), qui est opposé à la section terminale munie du filet extérieur (12, 32, 46, 73) pour l'écrou (3, 23, 43, 74).

2. Dispositif selon la revendication 1, caractérisé en ce que l'élément de raccordement (2, 22, 42) est réalisé sous la forme d'une douille filetée qui comporte le filetage de raccordement conformé en filet intérieur (11, 31) pour la section (6, 26) du boulon d'ancrage (1, 21, 41) munie du filet (7, 27).

3. Dispositif selon la revendication 1, caractérisé en ce que l'élément de raccordement est réalisé, sous la forme d'un boulon (68) avec filetage de raccordement conformé en filet extérieur (69), dans la région située en face du filet extérieur (73) pour l'écrou (74).

4. Dispositif selon la revendication 3, caractérisé en ce que l'épaulement de butée (71) est disposé entre les filets extérieurs (69, 73).

5. Dispositif selon l'une des revendications 1 à 4, caractérisé en ce que la face frontale de l'épaulement de butée (9) dirigée vers les objets (13) présente un profilage (15).

6. Dispositif selon l'une des revendications 1 à 5, caractérisé en ce que l'élément de raccordement (22, 42) comporte des moyens d'attaque (37, 48) pour un élément de retenue absorbant des couples de rotation.

7. Dispositif selon la revendication 6, caractérisé en ce que les moyens d'attaque sont conformés en surfaces de clé (37, 48).

8. Dispositif selon la revendication 7, caractérisé en ce que les surfaces de clé (37) sont disposées sur le contour intérieur de la douille filetée (22), dans la section terminale munie du filet extérieur (32) pour l'écrou (23).

9. Dispositif selon la revendication 7, caractérisé en ce que les surfaces de clé (48) sont disposées sur le contour extérieur de l'élément de raccordement (42), entre l'épaulement de butée (45) et le filet extérieur (46) et qu'elles dépassent de la projection axiale du filet extérieur (46).

10. Dispositif selon l'une des revendications 1 à 9, caractérisé en ce que le boulon d'ancrage (61) présente sur la tige d'ancrage (62) des saillies (65) destinées à s'opposer à un entraînement en rotation.

Fig. 2

Fig. 1

Fig. 4

Fig. 3

Fig. 6

Fig. 5

Fig. 7